# EUROPEAN PATENT APPLICATION

(11) **EP 3 023 659 A1**
(43) Date of publication of application: **25.05.2016**
(21) Application number: 15191587.3
(22) Date of filing: 27.10.2015
(51) Int. Cl.: F16C 41/02, F01D 25/16, F16C 19/54, F02C 7/06

(54) **BEARING APPARATUS WITH TWO BEARINGS AND PIVOT APPARATUS FOR EQUALISING THE AXIAL LOAD ON THE TWO BEARINGS**

(30) Priority: 04.11.2014 GB 201419615
(71) Applicant: Rolls-Royce plc, London SW1E 6AT (GB)
(72) Inventor: Webster, John R, Derby, Derbyshire DE23 6AF (GB); Fletcher, Paul, Derby, Derbyshire DE24 8BJ (GB)
(74) Representative: Rolls-Royce plc

(57) **Abstract**

A bearing apparatus (261) is provided between a first rotatable component (34) and a second component (36), preferably of a gas turbine. The bearing apparatus (261) includes a first bearing (28), a second bearing (30) and a pivot member (32). The pivot member (32) includes a first part (64) contacting the first bearing (28), a second part (66) contacting the second bearing (30) and a fulcrum (70) between the first part (64) and the second part (68). The pivot member (32) is arranged to pivot about the fulcrum (70) to distribute thrust load between the first bearing (28) and the second bearing (30).

## Description

The present disclosure concerns bearing apparatus and pivot apparatus for bearing apparatus.

Mechanical systems, such as gas turbine engines, usually include a bearing arrangement between a rotatable component (such as a rotor) and another component (which may be rotatable, or may be stationary (such as a casing)). Where the bearing arrangement includes two or more bearings, load may be unevenly distributed between the bearings which may result in one of the bearings wearing more quickly than the other bearing.

According to various, but not necessarily all, embodiments of the invention there is provided bearing apparatus comprising: a first bearing; a second bearing; a pivot member including a first part contacting the first bearing, a second part contacting the second bearing, and a fulcrum between the first part and the second part, the pivot member being arranged to pivot about the fulcrum to distribute load between the first bearing and the second bearing.

The first part and the second part may comprise a resilient material.

The bearing apparatus may further comprise a plurality of pivot members, each of the pivot members may include a first part to contact a first bearing, a second part to contact a second bearing, and a fulcrum between the first part and the second part, the pivot members may be arranged to pivot about their respective fulcrums to distribute load between the first and second bearings.

The bearing apparatus may further comprise at least one connector to couple at least two adjacent pivot members together.

The at least one connector may provide the fulcrums of the pivot members.

The plurality of pivot members and at least one connector may define an annulus.

The plurality of pivot members and at least one connector may define a section of an annulus.

The bearing apparatus may further comprise a first rotatable component of a gas turbine engine and a second component of the gas turbine engine, the first bearing and the second bearing being mounted between the first and second components of the gas turbine engine.

The first bearing may be mounted at a first axial location relative to the first rotatable component, and the second bearing may be mounted at a second, different, axial location relative to the first rotatable component.

The first bearing may be mounted at a first radial location relative to the first rotatable component, and the second bearing may be mounted at a second, different, radial location relative to the first rotatable component.

The bearing apparatus may further comprise a first slidable joint between the first bearing and the second component of the gas turbine engine.

The bearing apparatus may further comprise a second slidable joint between the second bearing and the first bearing, or between the second bearing and the second component of the gas turbine engine.

The fulcrum of the pivot member may be coupled to the second component of the gas turbine engine.

According to various, but not necessarily all, embodiments of the invention there is provided a gas turbine engine comprising bearing apparatus as described in any of the preceding paragraphs.

According to various, but not necessarily all, embodiments of the invention there is provided pivot apparatus for bearing apparatus, the pivot apparatus comprising: a plurality of pivot members coupled by at least one connector, wherein each pivot member of the plurality of pivot members includes a first part to contact a first bearing, a second part to contact a second bearing, and a fulcrum between the first part and the second part, the pivot member being arranged to pivot about the fulcrum to distribute load between the first bearing and the second bearing.

The plurality of pivot members and the at least one connector may define an annulus.

The plurality of pivot members and the at least one connector may define a section of an annulus.

The at least one connector may be to provide the fulcrum of at least one of the pivot members of the plurality of pivot members.

The first part and the second part may comprise a resilient material.

The pivot apparatus may be sized and shaped to extend a rotatable part of a gas turbine engine.

According to various, but not necessarily all, embodiments of the invention there is provided a gas turbine engine comprising pivot apparatus as described in any of the preceding paragraphs.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
**Figure 1** illustrates a schematic diagram of a cross sectional side view of a gas turbine engine according to various examples;
**Figure 2** illustrates a schematic diagram of a cross sectional side view of bearing apparatus according to various examples;
**Figure 3** illustrates a schematic diagram of a cross sectional side view of another bearing apparatus according to various examples;
**Figure 4** illustrates a schematic diagram of a front view of pivot apparatus according to various examples;
**Figure 5** illustrates a schematic diagram of a rear view of the pivot apparatus illustrated in Fig. 4; and
**Figure 6** illustrates a schematic diagram of a front view of another pivot apparatus according to various examples.

In the following description, the terms 'connect', 'couple', 'contact' and 'abut' mean operationally connected, coupled, contacted, and abutting. It should be appreciated that where these terms are used, there may be any number of intervening components between the mentioned features, including no intervening components.

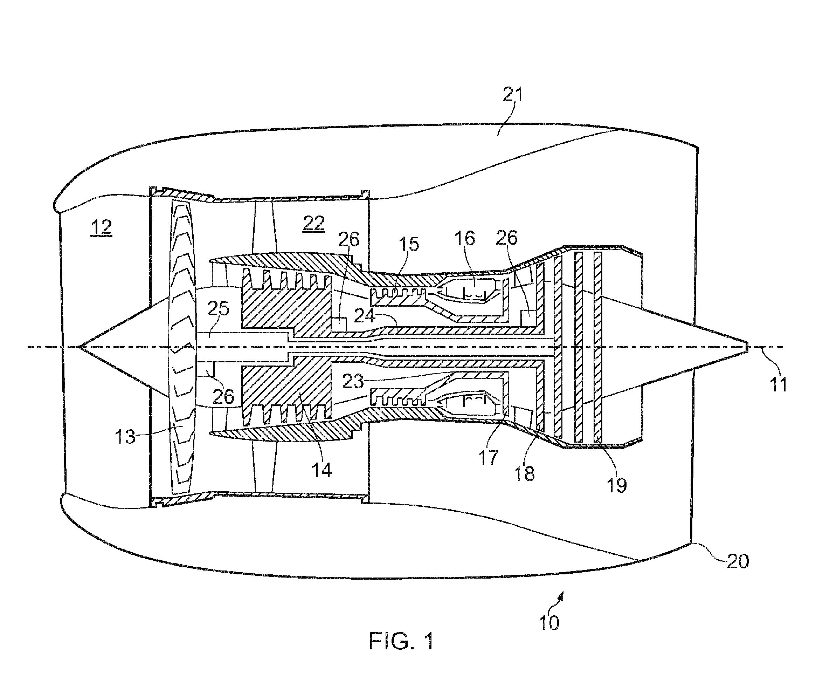

Figure 1 illustrates a schematic cross sectional side view of a gas turbine engine 10 according to an example. The gas turbine engine 10 has a principal and rotational axis 11, and comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19, and an exhaust nozzle 20. A nacelle 21 generally surrounds the engine 10 and defines both the intake 12 and the outlet nozzle 20.

Air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust.

The gas turbine engine 10 further comprises a high pressure shaft 23 coupling the high pressure compressor 15 and the high pressure turbine 17, an intermediate pressure shaft 24 coupling the intermediate pressure compressor 14 and the intermediate pressure turbine 18, and a fan shaft 25 coupling the fan 13 and the low pressure turbine 19. Each shaft 23, 24, 25 is mounted by one or more respective bearing apparatus 26, either to another shaft, or to a static structure of the gas turbine engine 10. The bearing apparatus 26 may constrain radial (i.e. vibration) and axial (i.e. thrust) loads.

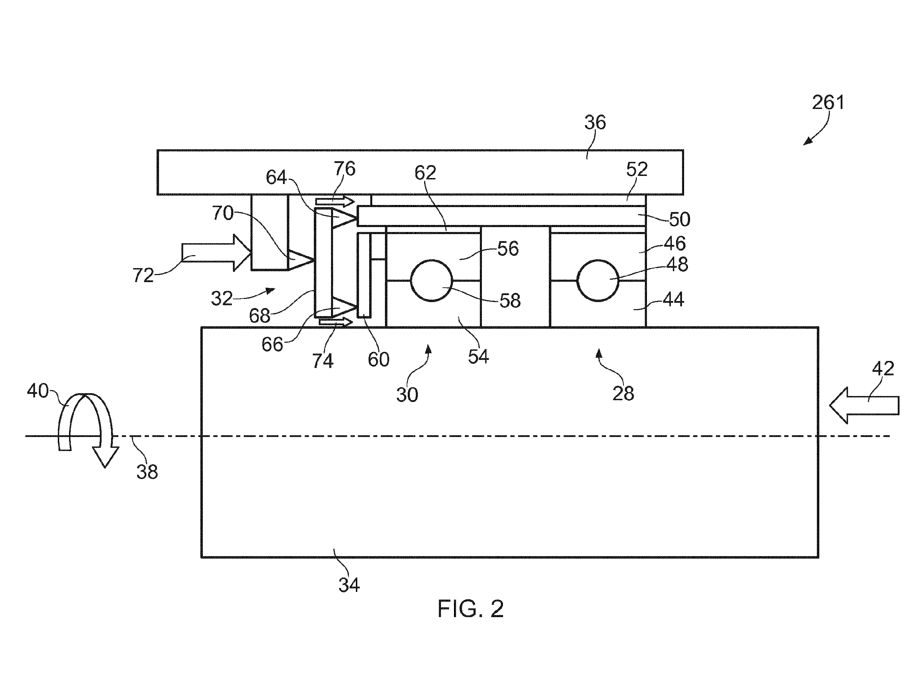

Fig. 2 illustrates a schematic cross sectional side view of bearing apparatus 261 according to various examples. The bearing apparatus 261 may be any of the bearing apparatus 26 illustrated in Fig. 1. It should also be appreciated that in other examples, the bearing apparatus 261 may be used in other mechanical systems different to the gas turbine engine 10. The bearing apparatus 261 includes a first bearing 28; a second bearing 30 and a pivot member 32. Also illustrated is a first component 34 of the gas turbine engine 10 and a second component 36 of the gas turbine engine 10.

The first component 34 of the gas turbine engine 10 may be any rotatable part of a mechanical system, and may comprise, for example, the high pressure shaft 23, the intermediate pressure shaft 24 or the fan shaft 25 illustrated in Fig. 1. The first component 34 is arranged to rotate about an axis 38 (which may be the rotational axis 11 of the gas turbine engine 10) as indicated by arrow 40, and receive a load (for example, a thrust load) as indicated by arrow 42. The load 42 may be caused by the pressure difference between the turbine section and the compressor section of the gas turbine engine 10.

The second component 36 of the gas turbine engine 10 may be any rotatable part of a mechanical system, or a stationary part of the mechanical system. For example, the second component 36 may be the intermediate pressure shaft 24, the fan shaft 25 or a casing of the gas turbine engine 10 (such as the casing of the fan 13). The second component 36 is positioned radially outwards from the first component 34 and defines a space there between (in which the bearing apparatus 261 is located). The second component 36 at least partially overlaps the first component 34 when viewed in plan (in other words, the second component 36 at least partially extends over the first component 34 along some axial locations).

The first bearing 28 includes an inner race 44, an outer race 46, a plurality of roller elements 48 (such as a plurality of ball bearings), and a first extension member 50. The inner race 44 is coupled to the first component 34 at a first axial location along the first component 34, and with the outer race 46, houses the plurality of roller elements 48.

The first extension member 50 is coupled to the outer race 46 and extends from the outer race 46 in a direction parallel to the axis 38. The first extension member 50 overlaps the second bearing 30 when viewed in plan, and in some examples, may extend beyond the second bearing 30. A first slidable joint 52 is positioned between the first extension member 50 of the first bearing 28 and the second component 36 of the gas turbine engine 10. The first slidable joint 52 may be an oil lubricated joint and may include a squeeze film element to provide radial compliance and damping. In other examples, the first slidable joint 52 may comprise an elastomer (such as nylon) or may comprise resilient diaphragms coupling the first extension member 50 and the second component 36. The first slidable joint 52 enables relative movement between the first bearing 28 and the second component 36.

The second bearing 30 includes an inner race 54, an outer race 56, a plurality of roller elements 58 (such as a plurality of ball bearings), and a second extension member 60. The inner race 54 is coupled to the first component 34 at a second axial location along the first component 34 (different to the first axial location), and with the outer race 56, houses the plurality of roller elements 58.

The second extension member 60 is coupled to the outer race 56 and extends from the outer race 56 in a direction parallel to the axis 38 and then extends radially inwards towards the first component 34. In this example, the second extension member 60 extends to the same axial position as the first extension member 50 and consequently, the first and second extension members 50, 60 overlap when viewed in plan. A second slidable joint 62 is positioned between the second bearing 30 and the first extension member 50 of the first bearing 28. The second slidable joint 62 may be an oil lubricated joint and may include a squeeze film element to provide radial compliance and damping. In other examples, the second slidable joint 62 may comprise an elastomer (such as nylon) or may comprise resilient diaphragms coupling the outer race 56 and the first extension member 50. The second slidable joint 62 enables relative movement between the second bearing 30 and the first extension member 50 of the first bearing 28.

The pivot member 32 includes a first part 64, a second part 66, an elongate member 68 and a fulcrum 70. The elongate member 68 is rigid and has a first end and a second opposite end. The first part 64 is positioned at the first end of the elongate member 68, and the second part 66 is positioned at the second end of the elongate member 68.

The first part 64 contacts the first extension member 50 of the first bearing 12. The first part 64 and the first extension member 50 may have any suitable shapes to enable the first part 64 to pivot relative to the first extension member 50. For example, the first part 64 may be a point contact on the first extension member 50 (as illustrated in Fig. 2). In other examples, the first part 64 may have a convex profile and the first extension member 50 may have a corresponding concave profile to receive the first part 64. In further examples, the first part 64 and the first extension member 50 may include spherical or ball sliding joints or flexural springs (which may be arranged to be in tension to prevent buckling). The first part 64 may comprise any suitable material, and may comprise in some examples, a resilient material.

The second part 66 contacts the second extension member 60 of the second bearing 30. The second part 66 and the second extension member 60 may have any suitable shapes to enable the second part 66 to pivot relative to the second extension member 60. For example, the second part 66 may be a point contact on the second extension member 60 (as illustrated in Fig. 2). In other examples, the second part 66 may have a convex profile and the second extension member 60 may have a corresponding concave profile to receive the second part 66. In further examples, the second part 66 and the second extension member 60 may include spherical or ball sliding joints or flexural springs (which may be arranged to be in tension to prevent buckling). The second part 66 may comprise any suitable material, and may comprise in some examples, a resilient material.

The fulcrum 70 (which may also be referred to as a pivot point) contacts the elongate member 68 between the first and second ends (that is, between the first part 64 and the second part 66). The fulcrum 70 is coupled to the second component 36 and is static relative to the second component 36. As described in more detail in the following paragraph, the pivot member 32 is arranged to pivot about the fulcrum 70 to distribute load between the first bearing 28 and the second bearing 30.

In operation, the first component 34 rotates about the axis 38 and receives the load 42 which is at least partially transferred to the first bearing 28 and to the second bearing 30. Where the load 42 is unevenly transferred between the first and second bearings 28, 30, the pivot member 32 enables the load to be distributed between the first and second bearings 28, 30.

For example, where the first bearing 28 receives a greater proportion of the load 42, the first bearing 28 moves towards the second bearing 30 (that is, to the left as illustrated in Fig. 2). The movement of the first bearing 28 causes the first extension member 50 to exert a load on the first part 64 that causes the pivot member 32 to rotate in an anti-clockwise direction. The fulcrum 70 is coupled to the second component 36 which opposes the load on the first part 64 as indicated by arrow 72 The load on the first part 64 is transferred to the second extension member 60 (and thus the second bearing 30) via the second part 66 as indicated by arrow 74.

By way of another example, where the second bearing 30 receives a greater proportion of the load 42, the second bearing 30 moves towards the pivot member 32 (that is, to the left as illustrated in Fig. 2). The movement of the second bearing 30 causes the second extension member 60 to exert a load on the second part 66 that causes the pivot member 32 to rotate in a clockwise direction. The fulcrum 70 is coupled to the second component 36 which opposes the load on the second part 66 as indicated by arrow 72 The load on the second part 66 is transferred to the first extension member 50 (and thus the first bearing 28) via the first part 64 as indicated by arrow 76.

It should be appreciated that in various examples, the bearing apparatus 261 may include a plurality of pivot members 32 as described in the preceding paragraphs. For example, a plurality of pivot members 32 may be evenly spaced around the axis 38 to enable load to be distributed between the first and second bearings 28, 30 at different angular (azimuth) positions around the axis 38.

The bearing apparatus 261 may provide several advantages. For example, where load is unevenly distributed between the first and second bearings 28, 30, the bearing apparatus 261 enables load to be transferred to the bearing receiving a lower proportion of the load, thus balancing the distribution of load between the bearings. This may advantageously reduce wear on the bearings. By way of another example, the bearing apparatus 261 may enable the distribution of loads between the bearings 28, 30, even at low loads, independent of mismatches in axial dimensions of the bearings 28, 30. The pivot member 32 may accommodate differences in axial dimensions with low (or zero) stiffness since it may accommodate these differences when taking up contact with the bearings.

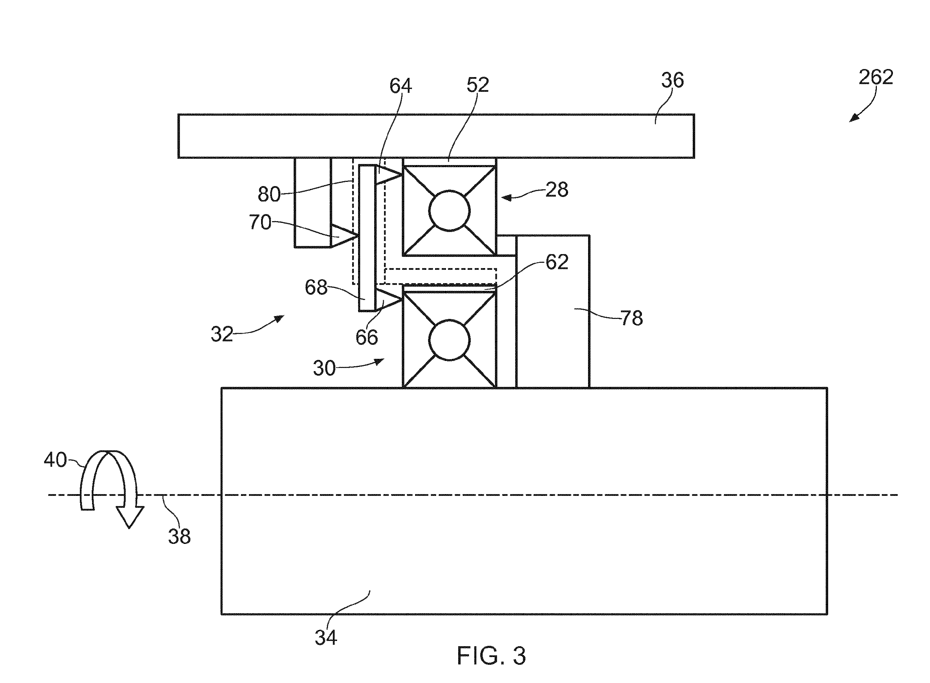

Figure 3 illustrates a schematic diagram of a cross sectional side view of another bearing apparatus 262 according to various examples. The bearing apparatus 262 is similar to the bearing apparatus 261 and where the features are similar, the same reference numerals are used. The bearing apparatus 262 may be any of the bearing apparatus 26 illustrated in Fig. 1. It should also be appreciated that in other examples, the bearing apparatus 262 may be used in other mechanical systems different to the gas turbine engine 10.

The bearing apparatus 262 differs from the bearing apparatus 261 in that the first bearing 28 is mounted at a first radial location relative to the first component 34, and the second bearing 30 is mounted at a second, different, radial location relative to the first component 34. The first bearing 28 and the second bearing 30 may be positioned at the same axial location relative to the first component 34. In other words, the first bearing 28 may be positioned outboard of the second bearing 30 and may at least partially overlay the second bearing 30, when viewed in plan.

In order to achieve the radial positioning, the first bearing 28 may be coupled to a first support member 78 that is positioned adjacent the second bearing 30 and extends radially outwards from the first component 34. The first slidable joint 52 is positioned between the first bearing 28 and the second component 36. The second bearing 30 may be coupled to a second support member 80 that is positioned adjacent the first bearing 28 and extends radially inwards from the second component 36. The second slidable joint 62 is positioned between the second bearing 30 and the second support member 80.

The bearing apparatus 262 may provide several advantages. Since the first and second bearings are positioned at the same axial location (or at least partially overlapping axial locations), the bearing apparatus 262 may be more compact than the bearing apparatus 261 and may consequently be used in mechanical systems where there is less space for the bearing apparatus.

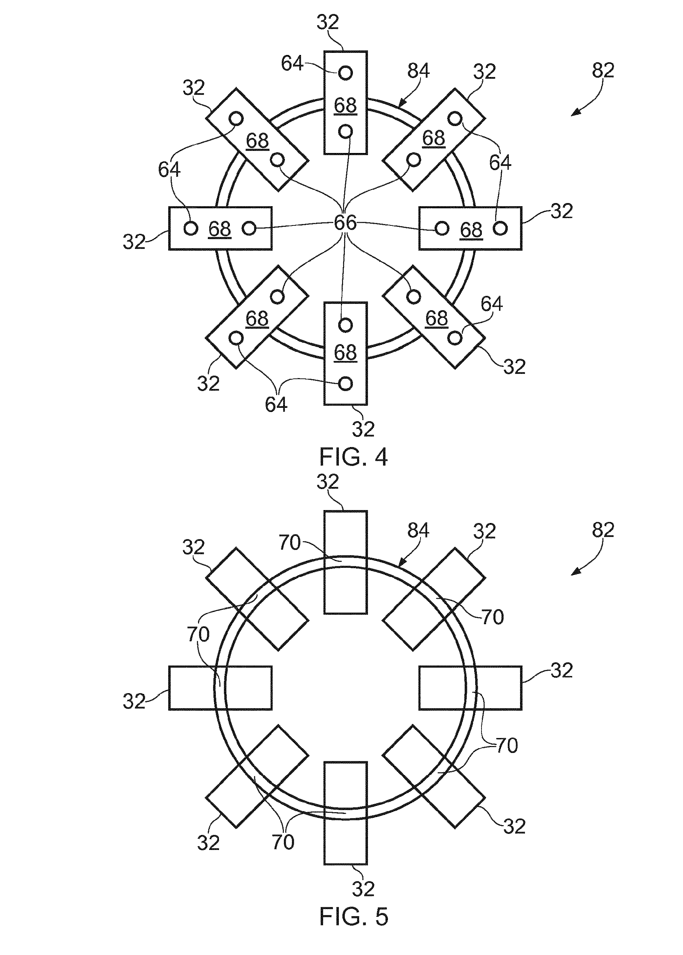

Figures 4 & 5 illustrate schematic diagrams of front and rear views respectively of pivot apparatus 82 according to various examples. The pivot apparatus 82 includes a plurality of pivot members 32 and at least one connector 84. The plurality of pivot members 32 are coupled together by at least one connector 84. The pivot members 32 have the same structure as the pivot members 32 illustrated in Figs. 2 and 3 and described in the preceding paragraphs. The at least one connector 84 may be a single connector that connects the pivot members 32 together, or the pivot apparatus 82 may include a plurality of connectors 84 that connect the pivot members 32 together.

In this example, the plurality of pivot members 32 and the at least one connector 84 define an annulus. The annulus may be sized and shaped to extend around a rotatable part of a mechanical system, and/or may be sized and shaped to fit into a part of a mechanical system. For example, the annulus may be sized and shaped to extend around a rotatable part (such as the fan shaft 25) of the gas turbine engine 10. By way of another example, the pivot apparatus 82 may be sized and shaped to fit into a slot of a casing of a gas turbine engine.

The at least one connector 84 may extend axially from the centre of the pivot members 32 and may thereby provide the fulcrum 70 of at least one of the pivot members 32. Consequently, the fulcrum 70 may be connected to (and may be integral with) the elongate member 68 of the pivot members 32.

Bearing apparatus 261, 262 may comprise a pivot apparatus 82 for advantageously distributing load between the first bearing 28 and the second bearing 30 at a plurality of angular positions.

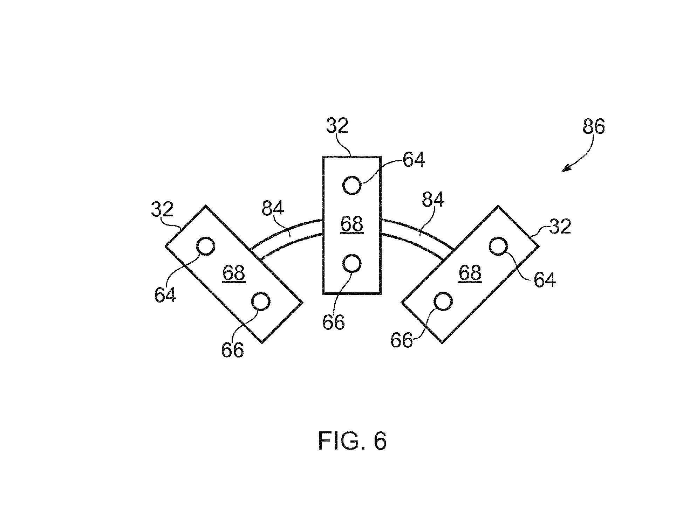

Figure 6 illustrates a schematic diagram of a front view of another pivot apparatus 86 according to various examples. The pivot apparatus 86 is similar to the pivot apparatus 82 illustrated in Figs. 4 & 5, and where the features are similar, the same reference numerals are used.

The pivot apparatus 86 differs from the pivot apparatus 82 in that the plurality of pivot members 32 and the at least one connector 84 define a section of an annulus (that is, they do not define a full annulus, only a part of an annulus). Bearing apparatus 261, 262 may comprise a plurality of pivot apparatus 86 for distributing load between the first bearing 28 and the second bearing 30 at a plurality of angular positions.

It will be understood that the invention is not limited to the embodiments above-described and various modifications and improvements can be made without departing from the various concepts described herein. For example, the bearing apparatus and the pivot apparatus described above may be used in non-gas turbine engine applications and may be used in, for example, aircraft landing gears or in rocket engine turbo pumps.

Except where mutually exclusive, any of the features may be employed separately or in combination with any other features and the invention extends to and includes all combinations and sub-combinations of one or more features described herein.

## Claims

1. Bearing apparatus comprising:
a first bearing;
a second bearing;
a pivot member including a first part contacting the first bearing, a second part contacting the second bearing, and a fulcrum between the first part and the second part, the pivot member being arranged to pivot about the fulcrum to distribute load between the first bearing and the second bearing.

2. Bearing apparatus as claimed in claim 1, wherein the first part and the second part comprise a resilient material.

3. Bearing apparatus as claimed in claim 1 or 2, further comprising a plurality of pivot members, each of the pivot members including a first part to contact a first bearing, a second part to contact a second bearing, and a fulcrum between the first part and the second part, the pivot members being arranged to pivot about their respective fulcrums to distribute load between the first and second bearings.

4. Bearing apparatus as claimed in claim 3, further comprising at least one connector to couple at least two adjacent pivot members together.

5. Bearing apparatus as claimed in any of the preceding claims, further comprising a first rotatable component of a gas turbine engine and a second component of the gas turbine engine, the first bearing and the second bearing being mounted between the first and second components of the gas turbine engine.

6. Bearing apparatus as claimed in claim 5, wherein the first bearing is mounted at a first axial location relative to the first rotatable component, and the second bearing is mounted at a second, different, axial location relative to the first rotatable component.

7. Bearing apparatus as claimed in claim 5 or 6, wherein the first bearing is mounted at a first radial location relative to the first rotatable component, and the second bearing is mounted at a second, different, radial location relative to the first rotatable component.

8. Bearing apparatus as claimed in any of claims 5 to 7, further comprising a first slidable joint between the first bearing and the second component of the gas turbine engine.

9. Bearing apparatus as claimed in any of claims 5 to 8, further comprising a second slidable joint between the second bearing and the first bearing, or between the second bearing and the second component of the gas turbine engine.

10. Bearing apparatus as claimed in any of claims 5 to 9, wherein the fulcrum of the pivot member is coupled to the second component of the gas turbine engine.

11. Pivot apparatus for bearing apparatus, the pivot apparatus comprising:
a plurality of pivot members coupled by at least one connector, wherein each pivot member of the plurality of pivot members includes a first part to contact a first bearing, a second part to contact a second bearing, and a fulcrum between the first part and the second part, the pivot member being arranged to pivot about the fulcrum to distribute load between the first bearing and the second bearing.

12. Pivot apparatus as claimed in claim 11, wherein the plurality of pivot members and the at least one connector define an annulus, or wherein the plurality of pivot members and the at least one connector define a section of an annulus.

13. Pivot apparatus as claimed in claim 11 or 12, wherein the at least one connector is to provide the fulcrum of at least one of the pivot members of the plurality of pivot members.

14. Pivot apparatus as claimed in any of claims 11 to 13, wherein the first part and the second part comprise a resilient material.

15. A gas turbine engine comprising bearing apparatus as claimed in any of claims 1 to 10 and/or pivot apparatus as claimed in any of claims 11 to 14.
